# EUROPEAN PATENT SPECIFICATION

(11) **EP 4 067 167 B1**
(45) Date of publication and mention of the grant of the patent: **13.03.2024**
(21) Application number: 22161880.4
(22) Date of filing: 14.03.2022
(51) Int. Cl.: B60N 3/00, B64D 11/06, B60R 11/00

(54) **INTERIOR TRIM COMPONENT**
INNENVERKLEIDUNGSKOMPONENTE
COMPOSANT DE GARNITURE INTÉRIEURE

(30) Priority: 30.03.2021 GB 202104519
(43) Date of publication of application: 05.10.2022
(73) Proprietor: Lisa Dräxlmaier GmbH, 84137 Vilsbiburg (DE)
(72) Inventor: Zagler, Helmut, 84085 Langquaid (DE); Grecu, Dumitru, 500159 Brasov (RO); Tiberiu-Ionut, Mladin, 507190 Brasov (RO)

(56) References cited:
- WO-A1-2004/005069
- DE-A1-102017 209 812
- DE-A1-102018 100 272
- US-B2- 8 267 472

## Description

### TECHNICAL FIELD

The present invention relates to an interior trim component for a vehicle comprising a support member movable between a retracted position and an extended position, a functional member movably attached to the support member between a stowage position and a use position, and a motion mechanism adapted at least to move the support member from the retracted position to the extended position. In particular, the interior trim component is a table in a motor vehicle.

The present invention is described below mainly in connection with a table in a motor vehicle. However, the idea can be used with respect to various interior trim components such as tables, trays or holders in vehicles.

### BACKGROUND OF THE INVENTION

The vehicle tables known to date have to be extracted by hand from a non-ergonomic position with significant physical effort. The table must then be positioned in a series of unfolding and rotating steps. There are typically complex mechanisms for executing the related movements. However, such complex mechanisms are expensive and vulnerable. As the above steps are usually carried out from unfavorable positions, they require both skill and strength on the part of the person operating the table.

In view of the future with the goal of autonomous driving, the interior of a vehicle must be better adapted to the needs of the occupants. It would therefore be desirable to provide a simpler and, in particular, more ergonomic interior trim component.

Document DE 10 2018 100272 A1 shows an interior trim component according to the preamble of claim 1.

### SUMMARY OF INVENTION

Taking the above statements as basis, the object of the present invention is that of providing an interior trim component that is simpler and more convenient to handle, does not obstruct the occupant and which nevertheless has a mechanism which is as simple as possible.

The object is solved by the subject matter of the independent claim 1. Advantageous developments of the invention are specified in the dependent claims, the description and the accompanying figures.

According to the invention, an interior trim component for a vehicle is proposed comprising: a support member movable between a retracted position and an extended position, a functional member movably attached to the support member by means of a release mechanism between a stowage position and a use position, and a motion mechanism adapted at least to move the support member from the retracted position to the extended position.

The support member supports the functional member. In the retracted position, the support member is retracted and preferably stowed in a stowage compartment. For example, the stowage compartment may be the center console. In the extended position, the support member is extended and located outside of the stowage compartment. The path from the retracted position to the extended position is configured in such a way that there is no obstruction by or for a seated person.

In the stowage position, the functional member is stowed on the support member, for example held in a folded position. In the use position, the functional member is unfolded and ready for use. The use position may be a basic use position of the functional member, from which the functional member can be moved into further use positions. In this way, for example, a usable area of the functional member can be increased. The functional member can be stowed together with the support member in the center console, e.g. under the center armrest.

According to the invention, the motion mechanism comprises an actuator for moving the support member, a fixed gear member arranged to be held in a fixed position when the support member is moved, a movable gear member meshing with the fixed gear member and being movable together with the support member, and a flexible drive for transmitting motion from the movable gear member to the release mechanism of the functional member.

The actuator is a mechanism that acts on the support member to move it from the retracted position to the extended position. Preferably, the actuator comprises a release mechanism, for example a button or switch. When the release mechanism is actuated, the actuator is adapted to move the support member to its extended position. Preferably, the actuator comprises a biasing mechanism. In general, the actuator may be a hydraulic, pneumatic, electric or mechanical actuator.

Preferably, the actuator comprises a spring, most preferably a gas spring. The gas spring uses compressed gas contained within an enclosed cylinder sealed by a sliding piston to pneumatically store potential energy. The gas spring enables a force that is almost independent of the spring displacement and has a small space requirement. It is further easily possible to integrate a damping mechanism into the spring. This makes the movement of the interior trim component steady and smooth.

Accordingly, the interior trim component pivots out of the stowage compartment automatically with the help of the actuator, e.g. the gas spring, after the release mechanism is actuated. By manually pivoting the support member back into the retracted position, the biasing mechanism, e.g. the gas spring in the system is biased again. The position of the seated person is ergonomically more favorable when pivoting into the retracted position than when pivoting out into the extended position.

As the fixed gear member is arranged in a fixed position, when the support member is moved, the support member moves relative to the fixed gear member. The support member can, for example, pivot around the fixed gear member. The fixed gear member may be attached to the vehicle floor. The movable gear member is preferably rotatably attached to the support member, in particular a housing thereof.

The flexible drive transmits motion from the movable gear member to the release mechanism of the functional member. The flexible drive is formed as a traction mechanism comprising traction means adapted to transmit force between the movable gear member and the release mechanism. The traction means can be, for example, a belt or a chain. As an alternative, it is also possible that the traction means are designed as a wire or tape made of metal or plastic. Then there would preferably be an additional support lever.

The movable gear member moves together with the support member. Accordingly, when moving the support member, the movable gear member rotates. The flexible drive is adapted to transmit the rotation of the movable gear member to the release mechanism. Accordingly, the motion mechanism is configured such that by moving the support member from the retracted position in the extended position, the functional member moves from the stowage position in the use position. Due to this mechanism, it is further only necessary to pivot the support member back into the retracted position, wherein the functional member pivots automatically with it into the stowage position.

The advantage here is that the interior trim component can be brought in a use position with a single actuation of the actuator. This brings a significant increase in comfort for the vehicle occupants when operating the interior trim component. Further, the motion mechanism is very simply formed with only two gear members.

According to an advantageous further development of the interior trim component according to the invention, the fixed gear member is formed as a gear segment and the movable gear member is formed as a gear wheel.

This allows for a particularly simple and less vulnerable configuration of the two gear members.

Preferably, in the interior trim component according to the invention, the flexible drive is a chain drive or a toothed belt.

A chain drive or toothed belt does not need large friction surfaces for power transmission like normal belt drives, for example. Therefore, smaller gear diameters are possible. Further, no pretension is necessary, which relieves the bearings.

In a preferred embodiment of the present invention, the flexible drive is in direct engagement with the movable gear member.

Direct engagement means an immediate engagement where there is no further transmission element between the movable gear member and the flexible drive. As a result, the motion mechanism has only a low level of complexity.

Advantageously, the movable gear member comprises a toothed portion which is wider than the toothed portion of the fixed gear member.

As a result, the movable gear member comprises a protruding toothed portion which extends beyond the fixed gear member. The protruding toothed portion can be used to transmit force directly from the movable gear member to the flexible drive.

In a preferred embodiment of the present invention, the motion mechanism comprises at least one guide pulley for supporting a change of direction of the flexible drive.

Preferably, the support member comprises at least one angled or bent portion. At this angled portion, an upper portion and a lower portion of the support member meet. The guide pulley is used to guide the flexible drive through the angled portion of the support member. Preferably, the guide pulley is rotatably attached to the support member. For example, the guide pulley is a wheel on an axle or shaft that is attached to the support member. The guide pulley may be toothed or at least substantially smooth. The guide pulley may have protruding portions, e.g. edges, to accommodate the flexible drive.

By using at least one guide pulley, it is possible to avoid a second flexible drive for deflecting the motion. Thus, only one flexible drive is necessary. Accordingly, the number of parts is reduced, which leads to a low component complexity.

According to an advantageous further development of the interior trim component according to the invention, the motion mechanism comprises at least two guide pulleys, wherein a first guide pulley is arranged on a flexible drive portion leading to the release mechanism and a second guide pulley is arranged on a flexible drive portion coming from the release mechanism.

With two guide pulleys, the mechanism is especially reliable.

According to an advantageous embodiment, the release mechanism preferably comprises a slide member connected to the flexible drive and being movable together with the flexible drive in a linear direction.

The slide member enables simple and reliable power transmission from the flexible drive to the functional element.

In a preferred embodiment of the present invention, the slide member is connected to at least one lever which is connected to the functional member to transmit motion from the slide member to the functional member.

Preferably, the slide member is connected to two levers to transmit the motion to the functional member. Particularly preferably, the slide member can be arranged on the flexible drive in such a way that one lever is arranged on one side of the flexible drive and the other lever is arranged on the other side of the flexible drive. In other words, the flexible drive runs in between the two levers. This results in a robust design. Further preferably, the support member comprises two slots through each of which one of the levers extends.

Advantageously, the functional member is pivotally connected to the at least one lever.

This enables the linear movement of the flexible drive or slide member to be converted into a pivoting movement of the functional member. This makes it possible to open or unfold the functional member. Accordingly, the functional member can be pivoted from the stowage position to the use position.

According to an advantageous further development of the interior trim component according to the invention, the functional member comprises a linear motion bearing movably bearing a supporting element.

Preferably, the supporting element is pivotally connected to at least one further lever connected to the support member.

The slide member is preferably attached to an end portion of the functional member by means of the at least one lever. When the slide member is moved, the functional member moves linearly relative to the supporting element supported by the linear motion bearing. At some point the supporting element will hit the end of the linear motion bearing, so that no further movement in the linear direction is possible. However, the slide member continues to move the end of the functional member, whereupon the supporting element pulls the functional member downwards so that the functional member unfolds. In doing so, the functional member pivots around the at least one lever.

In a preferred embodiment of the present invention, the supporting element is connected to two further levers, the two further levers being arranged on opposite sides of the functional member and projecting above the functional member, when the functional member is in its stowage position.

This allows for a particularly compact design, especially when the functional member is in the stowage position.

Advantageously, the interior trim component according to the invention is a table and the functional member is a plate.

### BRIEF DESCRIPTION OF THE DRAWINGS

Further advantages and developments as well as features of the present invention are revealed by the following detailed description of an exemplary embodiment made with reference to the accompanying drawings.

Figs. 1 to 6 illustrate an exemplary embodiment of an interior trim component according to the present invention in different views and level of detail. In this regard,
- Fig. 1: shows a view of the interior trim component with the support member in the retracted position;
- Fig. 2: shows a view of the interior trim component with the support member in the extended position;
- Fig. 3 and 4: show detailed views of the interior trim component with the support member in the retracted position, with the motion mechanism visible; and
- Fig. 5 and 6: show detailed views of the interior trim component with the support member in the extended position, with the motion mechanism visible.

Consequently, in the different views, identical parts are designated by identical reference numerals.

### DESCRIPTION OF AN EXEMPLARY EMBODIMENT

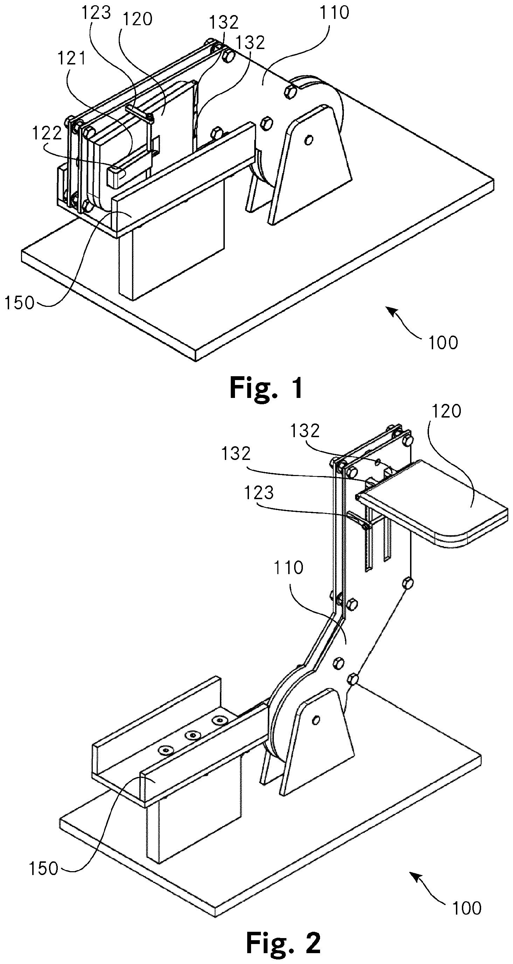

Fig. 1 and Fig. 2 show views of an interior trim component 100. The interior trim component 100 is formed as a table. The interior component 100 comprises a support member 110 and a functional member 120.

Fig. 1 and 2 show two different positions of the interior trim component 100. In the position shown in Fig. 1, the support member 110 is in its retracted position. In this position, the functional member 120 is in its stowage position. In the position shown in Fig. 2, the support member 110 is in its extended position. In this position, the functional member 120 is in its use position.

In the retracted position, the support member 110 is stowed in a stowage compartment 150. In the extended position, the interior trim component 100 is unfolded and can be used. As can be seen in Fig. 2, for example, the functional member 120 is in a horizontal position and can be used as a surface for working at, eating from or on which to place things.

The other reference numerals shown in Fig. 1 and 2 will be explained later to describe the motion of the interior trim component 100.

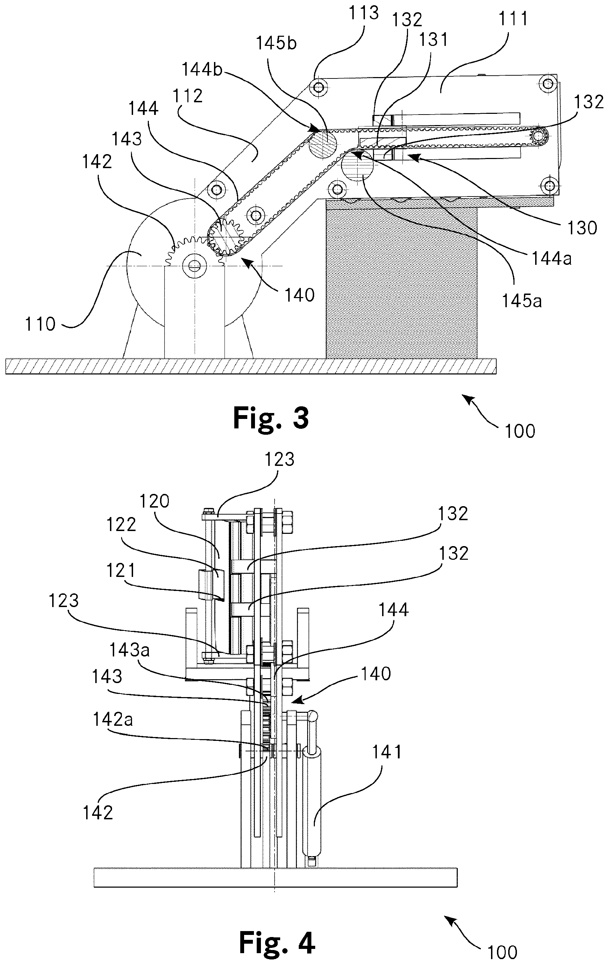

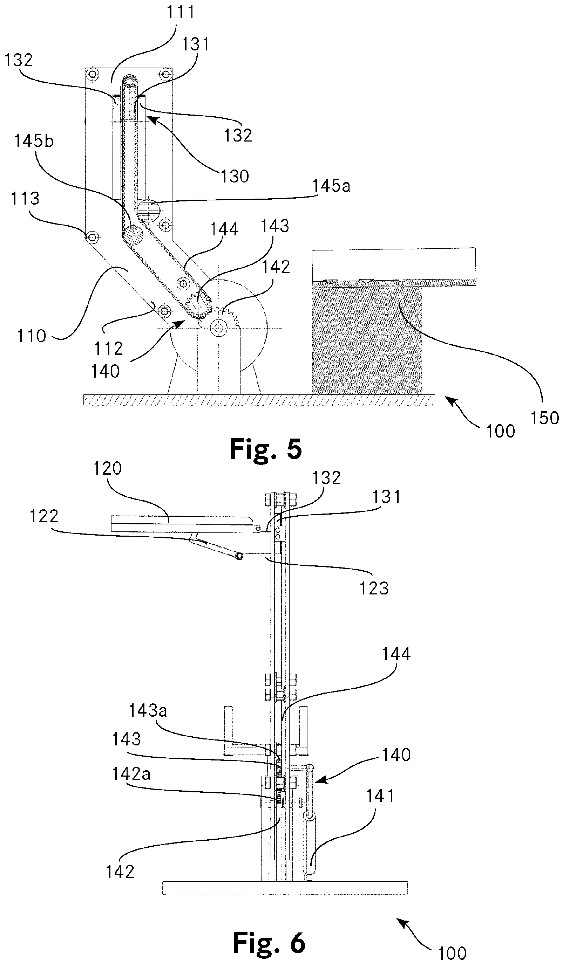

Figs. 3 to 6 show more detailed views of the interior trim component 100, which can be used to explain the mechanism of the interior trim component 100. Fig. 3 and 4 show the support member 110 in the retracted position and Fig. 5 and 6 show the support member 110 in the extended position.

The interior trim component 100 comprises a motion mechanism 140. The motion mechanism 140 is adapted to move the support member 110 from the retracted position to the extended position. As shown in Fig. 4, the motion mechanism 140 comprises an actuator 141 for moving the support member 110. The actuator 141 is preferably a gas spring having a cylinder and a sliding piston. One end of the sliding piston is attached to the support member 110, the other end is attached to the cylinder and, for example, the vehicle floor. This allows the actuator 141 to pivot the support member 110 as it extends.

The motion mechanism 140 further comprises a fixed gear member 142 arranged to be held in a fixed position when the support member 110 is moved and a movable gear member 143 meshing with the fixed gear member 142 and being movable together with the support member 110. As can be seen in Fig. 3 and Fig. 5, the fixed gear member 142 is preferably formed as a gear segment and the movable gear member 143 is preferably formed as a gear wheel.

The actuator 141 is preferably attached to the support member 110 at a position close to the movable gear member 143 in order to achieve a good power transmission.

As can be seen in Fig. 4 and Fig. 6, the movable gear member 143 comprises a toothed portion 143a which is wider than the toothed portion 142a of the fixed gear member 142. In other words, the movable gear member 143 comprises a protruding toothed portion which extends beyond the fixed gear member 142.

The motion mechanism 140 further comprises a flexible drive 144. The flexible drive 144 is configured to transmit motion from the movable gear member 143 to a release mechanism 130 of the functional member 120. The flexible drive 144 is in direct engagement with the movable gear member 143. For example, the flexible drive 144 is connected to the protruding toothed portion of the movable gear member 142. In the shown embodiment, the flexible drive 144 is a toothed belt drive.

The flexible drive 144 transmits motion from a lower portion 112 of the support member 112 to an upper portion 111 in which the release mechanism 130 of the functional member 120 is formed.

As can be seen in Fig. 3 and Fig. 5, the support member 110 comprises an angled portion 113, where the upper portion 111 and the lower portion 112 of the support member 110 meet at an angle. To support a change of direction of the flexible drive 144 the motion mechanism 140 comprises two guide pulleys 145a, 145b. The guide pulleys 145a, 145b are used to guide the flexible drive 144 through the angled portion 113 of the support member 110.

A first guide pulley 145a is arranged on a flexible drive portion 144a leading to the release mechanism 130 and a second guide pulley 145b is arranged on a flexible drive portion 144b coming from the release mechanism 130. This ensures a safe transmission of motion between the movable gear member 143 and the release mechanism 130.

As can be seen in the Figs. 3, 5 and 6, the release mechanism 130 comprises a slide member 131. The slide member 131 is connected to the functional member 120 via two levers 132. As shown in Fig. 6, the levers 132 are attached to an end portion of the functional member 120, wherein the functional member 120 is configured to pivot around the levers 132. This allows to unfold the functional member 120.

In Fig. 4 and Fig. 6, a support that interacts with the release mechanism 130 is shown particularly clearly. The support comprises a linear motion bearing 121, a supporting element 122 and two further levers 132. The linear motion bearing 121 bears the supporting element 122. The supporting element 122 is pivotally connected to the two further levers 123 which are connected to the support member 110.

The motion of the interior trim component 100 can be best described with reference to Fig. 1 and Fig. 2. When pivoting the support member 122, the flexible drive 144 transmits the rotation of the movable gear member 143 to a linear motion of the slide member 131. The slide member 131 is connected to the functional member 120 via the two levers 132 such that the functional member 120 moves linearly relative to the supporting element 122 via the linear motion bearing 121. When the supporting element 122 hits the end of the linear motion bearing 121, no further linear movement between the functional member 120 and the supporting element 122 is possible. When the slide member 131 continues to move the end of the functional member 120, this causes the supporting element 122, which is held by the further levers 123, to pull the functional member 120 downwards so that the functional member 120 unfolds.

Although the present invention has been explained in detail with reference to a purely exemplary embodiment, it goes without saying that the present invention is not limited to this embodiment, but rather that modifications and changes are possible within the scope of the following claims.

### THE FOLLOWING REFERENCE SIGNS ARE USED IN THIS DISCLOSURE:

- 100: interior trim component

- 110: support member
- 111: upper portion
- 112: lower portion
- 113: angled portion

- 120: functional member
- 121: linear motion bearing
- 122: supporting element
- 123: further lever

- 130: release mechanism
- 131: slide member
- 132: lever

- 140: motion mechanism
- 141: actuator
- 142: fixed gear member
- 142a: toothed portion (of the fixed gear member)
- 143: movable gear member
- 143a: toothed portion (of the movable gear member)
- 144: flexible drive
- 144a: flexible drive portion leading to the release mechanism
- 144b: flexible drive portion coming from the release mechanism
- 145a: first guide pulley
- 145b: second guide pulley

- 150: stowage compartment

## Claims

1. An interior trim component (100) for a vehicle comprising:
• a support member (110) movable between a retracted position and an extended position,
• a functional member (120) movably attached to the support member (110) by means of a release mechanism (130) between a stowage position and a use position, and
• a motion mechanism (140) adapted at least to move the support member (110) from the retracted position to the extended position, wherein the motion mechanism (140) comprises:
∘ an actuator (141) for moving the support member (110), **characterized in that** the motion mechanism further comprises:
∘ a fixed gear member (142) arranged to be held in a fixed position when the support member (110) is moved,
∘ a movable gear member (143) meshing with the fixed gear member (142) and being movable together with the support member (110), and
∘ a flexible drive (144) for transmitting motion from the movable gear member (143) to the release mechanism (130) of the functional member (120).

2. The interior trim component (100) of claim 1, wherein the fixed gear member (142) is formed as a gear segment and the movable gear member (143) is formed as a gear wheel.

3. The interior trim component (100) of claim 1 or 2, wherein the flexible drive (144) is a chain drive or a toothed belt.

4. The interior trim component (100) of any one of the preceding claims, wherein the flexible drive (144) is in direct engagement with the movable gear member (143).

5. The interior trim component (100) of claim 4, wherein the movable gear member (143) comprises a toothed portion (143a) which is wider than the toothed portion (142a) of the fixed gear member (142).

6. The interior trim component (100) of any one of the preceding claims, wherein the motion mechanism (140) comprises at least one guide pulley (145a, 145b) for supporting a change of direction of the flexible drive (144).

7. The interior trim component (100) of claim 6, wherein the motion mechanism (140) comprises at least two guide pulleys (145a, 145b), wherein a first guide pulley (145a) is arranged on a flexible drive portion (144a) leading to the release mechanism (130) and a second guide pulley (145b) is arranged on a flexible drive portion (144b) coming from the release mechanism (130).

8. The interior trim component (100) of any one of the preceding claims, wherein the release mechanism (130) comprises a slide member (131) connected to the flexible drive (144) and being movable together with the flexible drive (144) in a linear direction.

9. The interior trim component (100) of claim 8, wherein the slide member (131) is connected to at least one lever (132) which is connected to the functional member (120) to transmit motion from the slide member (131) to the functional member (120).

10. The interior trim component (100) of claim 9, wherein the functional member (120) is pivotally connected to the at least one lever (132).

11. The interior trim component (100) of any one of the preceding claims, wherein the functional member (120) comprises a linear motion bearing (121) movably bearing a supporting element (122).

12. The interior trim component (100) of claim 11, wherein the supporting element (122) is pivotally connected to at least one further lever (123) connected to the support member (110).

13. The interior trim component (100) of claim 11 or 12, wherein the supporting element (122) is connected to two further levers (123), the two further levers (123) being arranged on opposite sides of the functional member (110) and projecting above the functional member (110), when the functional member (110) is in its stowage position.

14. The interior trim component (100) of any one of the preceding claims, wherein the interior trim component (100) is a table and the functional member (110) is a plate.

## Patentansprüche

1. Innenverkleidungskomponente (100) für ein Fahrzeug, umfassend:
• ein Trägerelement (110), das zwischen einer einziehbaren Position und einer ausfahrbaren Position beweglich ist,
• ein Funktionselement (120), das mittels eines Auslösemechanismus (130) zwischen einer Stauposition und einer Gebrauchsposition beweglich an dem Trägerelement (110) angebracht ist, und
• einen Bewegungsmechanismus (140), der zumindest dazu geeignet ist, das Trägerelement (110) von der einziehbaren Position in die ausfahrbare Position zu bewegen, wobei der Bewegungsmechanismus (140) umfasst
∘ einen Aktor (141) zum Bewegen des Trägerelements (110), **dadurch gekennzeichnet, dass** der Bewegungsmechanismus ferner umfasst:
∘ ein feststehendes Zahnradelement (142), das so angeordnet ist, dass es in einer festen Position gehalten wird, wenn das Trägerelement (110) bewegt wird,
∘ ein bewegliches Zahnradelement (143), das sich mit dem feststehenden Zahnradelement (142) verzahnt und dadurch zusammen mit dem Trägerelement (110) beweglich ist, und
∘ eines flexiblen Antriebs (144) zur Übertragung der Bewegung von dem beweglichen Zahnradelement (143) auf den Auslösemechanismus (130) des Funktionselements (120).

2. Innenverkleidungskomponente (100) nach Anspruch 1, wobei das feststehende Zahnradelement (142) als Zahnsegment und das bewegliche Zahnradelement (143) als Zahnrad ausgebildet ist.

3. Innenverkleidungskomponente (100) nach Anspruch 1 oder 2, wobei der flexible Antrieb (144) ein Kettenantrieb oder ein Zahnriemenantrieb ist.

4. Innenverkleidungskomponente (100) nach einem der vorhergehenden Ansprüche, wobei der flexible Antrieb (144) direkt mit dem beweglichen Zahnradelement (143) in Eingriff steht.

5. Innenverkleidungskomponente (100) nach Anspruch 4, wobei das bewegliche Zahnradelement (143) eine Verzahnung (143a) aufweist, die breiter ist als die Verzahnung (142a) des festen Zahnradelements (142).

6. Innenverkleidungskomponente (100) nach einem der vorhergehenden Ansprüche, wobei der Bewegungsmechanismus (140) mindestens eine Umlenkrolle (145a, 145b) zur Unterstützung eines Richtungswechsels des flexiblen Antriebs (144) aufweist.

7. Innenverkleidungskomponente (100) nach Anspruch 6, wobei der Bewegungsmechanismus (140) mindestens zwei Umlenkrollen (145a, 145b) umfasst, wobei eine erste Umlenkrolle (145a) an einem zu dem Auslösemechanismus (130) führenden flexiblen Antriebsabschnitt (144a) und eine zweite Umlenkrolle (145b) an einem von dem Auslösemechanismus (130) kommenden flexiblen Antriebsabschnitt (144b) angeordnet ist.

8. Innenverkleidungskomponente (100) nach einem der vorhergehenden Ansprüche, wobei der Auslösemechanismus (130) ein mit dem flexiblen Antrieb (144) verbundenen Schieber(131) umfasst, der zusammen mit dem flexiblen Antrieb (144) in einer linearen Richtung beweglich ist.

9. Innenverkleidungskomponente (100) nach Anspruch 8, wobei der Schieber (131) mit mindestens einem Hebel (132) verbunden ist, der mit dem Funktionselement (120) verbunden ist, um eine Bewegung von dem Schieber (131) auf das Funktionselement (120) zu übertragen.

10. Innenverkleidungskomponente (100) nach Anspruch 9, wobei das Funktionselement (120) schwenkbar mit mindestens einem Hebel (132) verbunden ist.

11. Innenverkleidungskomponente (100) nach einem der vorhergehenden Ansprüche, wobei das Funktionselement (120) ein Linearwälzlager (121) umfasst, das ein Stützelement (122) beweglich trägt.

12. Innenverkleidungskomponente (100) nach Anspruch 11, wobei das Stützelement (122) mit mindestens einem weiteren, mit dem Trägerelement (110) verbundenen Hebel (123) schwenkbar verbunden ist.

13. Innenverkleidungskomponente (100) nach Anspruch 11 oder 12, wobei das Stützelement (122) mit zwei weiteren Hebeln (123) verbunden ist, wobei die beiden weiteren Hebel (123) auf gegenüberliegenden Seiten des Trägerelements (110) angeordnet sind und über das Trägerelement (110) hinausragen, wenn sich das Trägerelement (110) in seiner Stauposition befindet.

14. Innenverkleidungskomponente (100) nach einem der vorhergehenden Ansprüche, wobei die Innenverkleidungskomponente (100) ein Tisch und das Trägerelement (110) eine Platte ist.

## Revendications

1. Composant de garniture intérieure (100) pour un véhicule comprenant :
- un élément de support (110) mobile entre une position rétractée et une position étendue,
- un élément fonctionnel (120) fixé de manière mobile à l'élément de support (110) au moyen d'un mécanisme de libération (130) entre une position de rangement et une position d'utilisation, et
- un mécanisme de mouvement (140) adapté au moins pour déplacer l'élément de support (110) de la position rétractée à la position étendue, dans lequel le mécanisme de mouvement (140) comprend :
∘ un actionneur (141) pour déplacer l'élément de support (110), **caractérisé en ce que** le mécanisme de mouvement comprend en outre :
∘ un élément d'engrenage fixe (142) conçu pour être maintenu dans une position fixe lorsque l'élément de support (110) est déplacé,
∘ un élément d'engrenage mobile (143) s'engrenant avec l'élément d'engrenage fixe (142) et pouvant être déplacé en même temps que l'élément de support (110), et
∘ un entraînement flexible (144) pour transmettre le mouvement de l'élément d'engrenage mobile (143) au mécanisme de déclenchement (130) de l'élément fonctionnel (120).

2. L'élément de garniture intérieure (100) de la revendication 1, dans lequel l'élément d'engrenage fixe (142) est formé comme un segment d'engrenage et l'élément d'engrenage mobile (143) est formé comme une roue d'engrenage.

3. L'élément de garniture intérieure (100) de la revendication 1 ou 2, dans lequel l'entraînement flexible (144) est un entraînement par chaîne ou une courroie crantée.

4. Le composant de garniture intérieure (100) de l'une des revendications précédentes, dans lequel l'entraînement flexible (144) est en prise directe avec l'élément d'engrenage mobile (143).

5. L'élément de garniture intérieure (100) de la revendication 4, dans lequel l'élément d'engrenage mobile (143) comprend une partie dentée (143a) qui est plus large que la partie dentée (142a) de l'élément d'engrenage fixe (142).

6. L'élément de garniture intérieure (100) de l'une quelconque des revendications précédentes, dans lequel le mécanisme de mouvement (140) comprend au moins une poulie de guidage (145a, 145b) pour supporter un changement de direction de l'entraînement flexible (144).

7. Le composant de garniture intérieure (100) de la revendication 6, dans lequel le mécanisme de mouvement (140) comprend au moins deux poulies de guidage (145a, 145b), dans lequel une première poulie de guidage (145a) est disposée sur une partie d'entraînement flexible (144a) menant au mécanisme de libération (130) et une deuxième poulie de guidage (145b) est disposée sur une partie d'entraînement flexible (144b) venant du mécanisme de libération (130).

8. Le composant de garniture intérieure (100) de l'une des revendications précédentes, dans lequel le mécanisme de libération (130) comprend un élément coulissant (131) relié à l'entraînement flexible (144) et pouvant être déplacé avec l'entraînement flexible (144) dans une direction linéaire.

9. L'élément de garniture intérieure (100) de la revendication 8, dans lequel l'élément coulissant (131) est relié à au moins un levier (132) qui est relié à l'élément fonctionnel (120) pour transmettre le mouvement de l'élément coulissant (131) à l'élément fonctionnel (120).

10. L'élément de garniture intérieure (100) de la revendication 9, dans lequel l'élément fonctionnel (120) est relié de manière pivotante à l'au moins un levier (132).

11. L'élément de garniture intérieure (100) de l'une des revendications précédentes, dans lequel l'élément fonctionnel (120) comprend un palier de mouvement linéaire (121) portant de manière mobile un élément de support (122).

12. L'élément de garniture intérieure (100) de la revendication 11, dans lequel l'élément de support (122) est relié de manière pivotante à au moins un autre levier (123) relié à l'élément de support (110).

13. L'élément de garniture intérieure (100) de la revendication 11 ou 12, dans lequel l'élément de support (122) est relié à deux autres leviers (123), les deux autres leviers (123) étant disposés sur les côtés opposés de l'élément fonctionnel (110) et faisant saillie au-dessus de l'élément fonctionnel (110), lorsque l'élément fonctionnel (110) est dans sa position de rangement.

14. L'élément d'habillage intérieur (100) de l'une quelconque des revendications précédentes, dans lequel l'élément d'habillage intérieur (100) est une table et l'élément fonctionnel (110) est une plaque.
